# EUROPÄISCHE PATENTSCHRIFT

(11) **EP 2 733 262 B1**
(45) Veröffentlichungstag und Bekanntmachung des Hinweises auf die Patenterteilung: **07.09.2016**
(21) Anmeldenummer: 13005260.8
(22) Anmeldetag: 08.11.2013
(51) Int. Cl.: E01H 1/05, B62K 9/00

(54) **Kehrgerät für ein Kinderfahrzeug, insbesondere für ein Tretfahrzeug**
Sweeping appliance for a children's vehicle, in particular for a pedal vehicle
Appareil de balayage pour un véhicule d'enfant, notamment pour un trotteur

(30) Priorität: 20.11.2012 DE 102012022638
(43) Veröffentlichungstag der Anmeldung: 21.05.2014
(73) Patentinhaber: Franz Schneider GmbH & Co. KG, 96465 Neustadt (DE)
(72) Erfinder: Ewringmann, Ulrich, 82024 Taufkirchen (DE); Schneider, Frank, 96465 Neustadt (DE); Luther, Rainer, 96465 Neustadt (DE)
(74) Vertreter: Flosdorff, Jürgen

(56) Entgegenhaltungen:
- DE-A1-102008 007 895
- US-A- 2 727 264
- US-A- 3 868 741
- US-A- 3 959 922
- US-A- 3 983 662
- US-A1- 2007 107 404

## Beschreibung

Die Erfindung betrifft ein Kehrgerät, das mit einem Kinderfahrzeug, insbesondere einem Tretfahrzeug, lösbar verbindbar ist, wobei das Kehrgerät eine im wesentlichen horizontal angeordnete Bürstenwalze enthält, die sich unter einem Gehäuseteil befindet und mit einer Achse drehfest verbunden ist, zu deren Antrieb ein Mitnehmerrad angeordnet ist, das in der funktionsfähigen Lage des Kehrgerätes am Boden anliegt und beim Fahren des Kinderfahrzeugs gedreht wird.

Ein derartiges Kehrgerät ist aus der DE 10 2008 007 895 A1 bekannt. Bei diesem Kehrgerät ist das Mitnehmerrad auf besondere Weise schwenkbar gelagert, so dass bei Lenkbewegungen des Kinderfahrzeugs das Mitnehmerrad entsprechend einlenkt, wodurch verhindert ist, dass beim Kurvenfahren des Kinderfahrzeugs mit der Kehrmaschine das Mitnehmerrad nur über den Boden rutscht und die Bürstenwalze nicht antreibt. Der Antriebsmechanismus des Kehrgerät ist dadurch verhältnismäßig aufwendig.

Die US 3 983 662 A, US 2 727 264 A, US 3 868 741 A, US 2007/107404 A1 und US 3 959 922 A offenbaren Kehrgeräte, die von einer Person an einem Handgriff ergriffen und beispielsweise über einen Rasen vorgeschoben werden. Diese Kehrgeräte sind nicht dazu geeignet, mit einem Kinderfahrzeug verbunden zu werden, da sie keinen hierzu geeigneten Aufbau haben.

Diese Kehrgeräte haben jeweils zwei Mitnehmerräder, die zu beiden Seiten einer Bürstenwalze oder eines Flügelrades angeordnet und mit diesem antriebsmäßig verbunden sind. Bei dem Kehrgerät der US 3 983 662 A haben die beiden Mitnehmerräder jeweils einen hohlen Innenraum, in dem sich ein Getriebe befindet, über das die Mitnehmerräder mit dem Flügelrad antriebsmäßig verbunden sind. Das Flügelrad ist an beiden Seiten durch Befestigungselement mit Greiferpaaren mit den zugehörigen seitlichen Getrieben verbunden, wobei die Greifelemente das Flügelrad frei geben, wenn ein Mitnehmerrad blockiert ist. Hierzu hat jedes Greifelemente ein Paar elastischer Finger, die lösbar in eine quadratische Öffnung in einem Zahnrad des jeweiligen Getriebes eingreifen. Durch diese Ausbildung ist verhindert, dass das Flügelrad durch Blockierung eines Mitnehmerrades beschädigt wird, indem das Flügelrad zuvor von dem blockierten Antrieb frei gegeben wird. Diese Ausbildung ist kompliziert und schadensanfällig.

Ein ähnliches Problem tritt bei den anderen der oben genannten Kehrgeräten auf, wenn eines der Mitnehmerräder blockiert ist.

Der vorliegenden Erfindung liegt die Aufgabe zugrunde, ein Kehrgerät mit einem einfacheren Aufbau, insbesondere einem einfacheren Antrieb auszubilden. Da das Kehrgerät auch von kleinen Kindern benutzt werden kann, die nicht immer mit Vorsicht das Spielgerät handhaben, soll der Antrieb zudem so gestaltet sein, dass eine Verletzungsgefahr durch ihn weitgehend ausgeschlossen ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass sich das Getriebe, mit dem die Achse der Bürstenwalze antriebsmäßig verbunden ist, im Inneren des Mitnehmerrads befindet, das durch eine Abdeckung nach außen verschlossen ist, so dass es für die Hände der Spielperson praktisch unzugänglich ist und keine Verletzung an Fingern hervorrufen kann. Dadurch, dass das Getriebe in einem Hohlraum des Mitnehmerrades praktisch eingekapselt ist, kann es auch nicht durch äußere Einwirkung beschädigt oder in einen nicht-funktionsfähigen Zustand versetzt werden. Das Mitnehmerrad enthält eine Lauffläche, die bevorzugt einen Belag aus einem Material mit hohem Reibungskoeffizienten, wie z.B. Gummi, aufweist, und an seiner von der Bürstenwalze abgewandten Außenseite wenigstens eine im wesentlichen geschlossene kreisförmige Wand, während die gegenüber liegende Seite des Mitnehmerrads offen ist. Diese offene Seite wird von einer feststehenden Abdeckscheibe verschlossen, die weiter unten näher beschrieben wird.

Mit großem Vorteil wird vorgeschlagen, dass das Getriebe in dem Mitnehmerrad ein Zahnradgetriebe ist. Es kommt aber auch beispielsweise ein Reibradgetriebe in Betracht.

Mit großem Vorteil wird weiterhin vorgeschlagen, dass mittig in dem Mitnehmerrad ein konzentrischer Zahnkranz angebracht, vorzugsweise an einer kreisförmigen Seitenwand angeformt ist, der somit drehfest mit dem Mitnehmerrad verbunden ist, und dass mit diesem kreisförmigen Zahnkranz ein Zahnrad kämmt, das drehfest mit der Achse der Bürstenwalze verbunden ist. Der Zahnkranz hat vorzugsweise eine Außenverzahnung, ebenso wie das Zahnrad, das außermittig in dem hohlen Mitnehmerrad gehalten ist.
Hierzu dient die Abdeckscheibe des Mitnehmerrades, durch die die Achse der Bürstenwalze mit einem Endabschnitt gesteckt ist, wobei in das zugehörige Loch der Abdeckscheibe bevorzugt ein Lagerkörper eingepresst ist, in dem die Achse drehbar gelagert ist. Die Achse ist anschließend mit dem Zahnrad des Getriebes drehfest verbunden, indem es beispielsweise in einen hülsenförmigen Ansatz des Zahnrades eingesetzt ist.

Die Abdeckscheibe hält damit das Zahnrad in der Position, in der es mit dem Zahnkranz kämmt.

Die Abdeckscheibe ist an der von der Bürstenwalze abgewandten Seite mit einer mittigen Hülse mit Innengewinde, die als Steckachse dient, versehen, auf der das Mitnehmerrad drehbar sitzt. Hierzu kann die Steckachse in einen mittig in dem Zahnkranz angeformten hülsenförmigen Ansatz eingreifen.

Die Abdeckscheibe ist indirekt an dem Gehäuse befestigt. Erfindungsgemäß ist die Abdeckscheibe an einer bevorzugt parallel zur Bürstenwalze verlaufenden Stange angebracht, indem diese Stange mit einem Endabschnitt in eine vorzugsweise rechteckige Öse eingreift, die von der Abdeckscheibe absteht, oder in eine Halterung, die auf der Vorderseite der Scheibe befestigt ist. Die Stange hat einen formschlüssigen Querschnitt und ist an dem Gehäuseteil fest angebracht.

Weiter ist erfindungsgemäß vorgesehen, dass auf den anderen Endabschnitt der Stange ein Kragarmträger aufgesteckt ist, der an seinem zugehörigen Endabschnitt einen entsprechenden Haltekörper mit einem Einsteckkanal hat, in den die Stange eingreift. Damit ist der Kragarmträger nicht-schwenkbar an der Stange gehalten. Dies könnte auch durch eine andere nicht-runde Querschnittsform der Stange und der Einsteckkanäle der Haltekörper hervorgerufen werden.

Der Kragarm trägt erfindungsgemäß an seinem anderen Endabschnitt eine Rolle, die in der funktionsfähigen Lage des Kehrgerätes ebenso wie das Mitnehmerrad am Boden anliegt. Außerdem ist die Achse der Bürstenwalze drehbar in dem Kragarmträger gelagert, indem sie an einer axialen Zwischenposition des Kragarmträgers ein entsprechendes Loch, gegebenenfalls mit einem verpressten Lagerkörper durchgreift.

Nach einem weiteren Vorschlag der Erfindung kann die Rolle an einer Gewindespindel befestigt sein, die in eine Gewindehülse des Kragarmträgers eingeschraubt ist. Durch Drehen der Gewindespindel ist damit die Höhenlage der Bürstenwalze an dieser Seite verstellbar.

Das Getriebe des Kehrgerätes hat einen sehr einfachen Aufbau, und das Kehrgerät ist so ausgebildet, dass auch für noch unerfahrene kleine Kinder praktisch keine Verletzungsgefahr besteht.

Nach einem weiteren Gesichtspunkt der Erfindung ist das Gehäuse des Kehrgeräts mit einem Bügel versehen, mit dem es in eine angehobene Stellung hochklappbar ist, beispielsweise damit das Kinderfahrzeug ungehindert durch das Kehrgerät an einen anderen Ort verfahrbar ist.

Das Kinderfahrzeug hat zur lösbaren Befestigung des Kehrgeräts bevorzugt an seiner vorderen Stirnseite ein Kupplungsmaul, an dem das Kehrgerät so befestigbar ist, dass es in der horizontalen Ebene nicht-schwenkbar ist. Zur Befestigung des Kehrgerätes an dem Kinderfahrzeug ist mit besonderem Vorzug ein Adapter vorgesehen, der zusammen mit dem oben erwähnten Bügel an der von der Bürstenwalze abgewandten Seite des Gehäuses angeschraubt sein kann.

Weitere Einzelheiten der Erfindung ergeben sich aus der nachfolgenden Beschreibung einer bevorzugten Ausführungsform sowie anhand der Zeichnungen. Dabei zeigen:
- Figur 1: eine Ausführungsform des Kehrgeräts an einem Kinderfahrzeug in der funktionsfähigen Lage am Boden;
- Figur 2: die Anordnung gemäß Figur 1 mit angehobenem Kehrgerät;

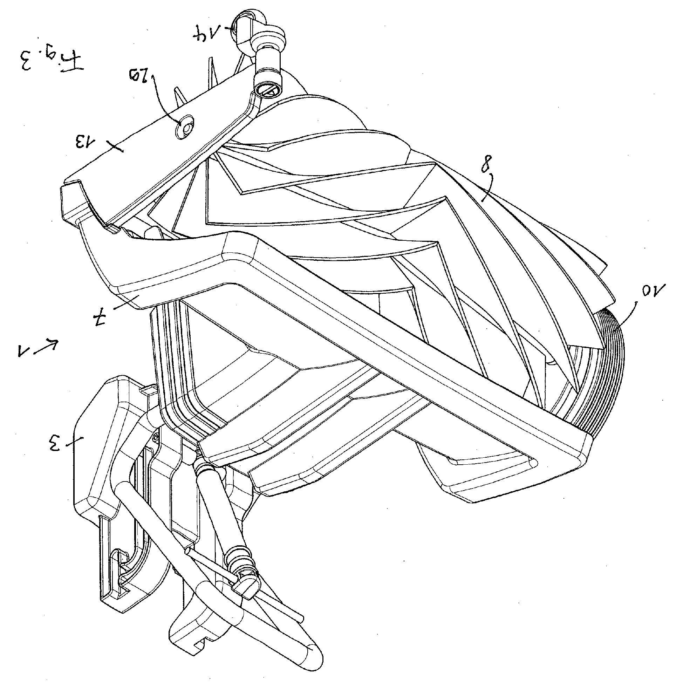

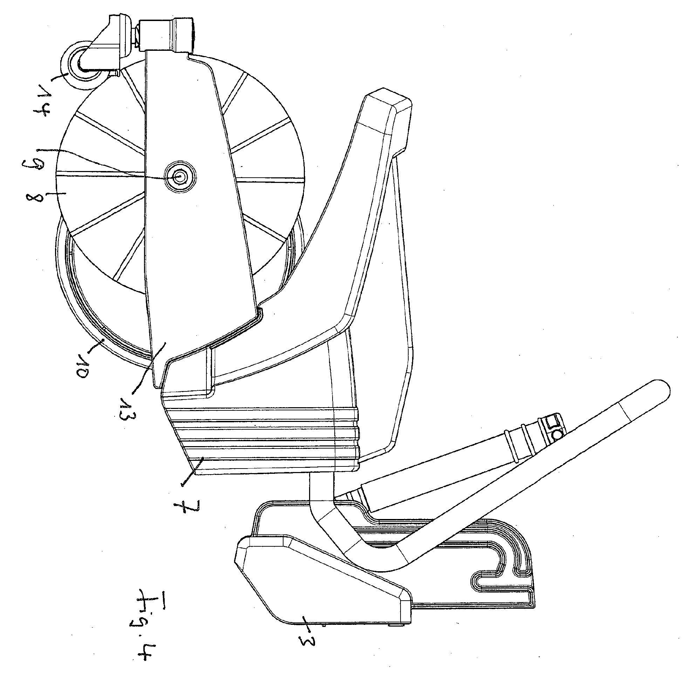

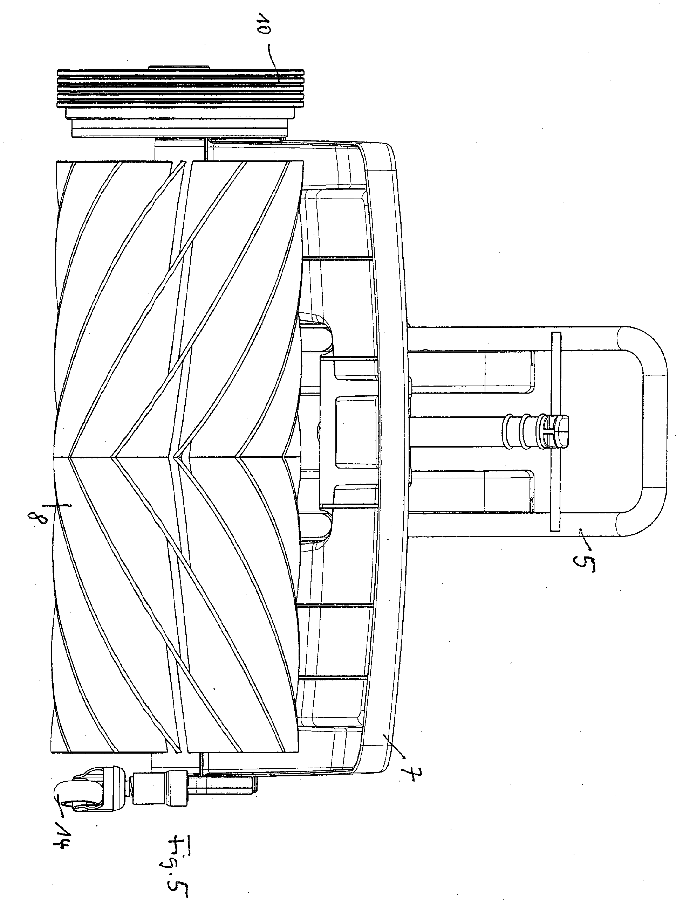

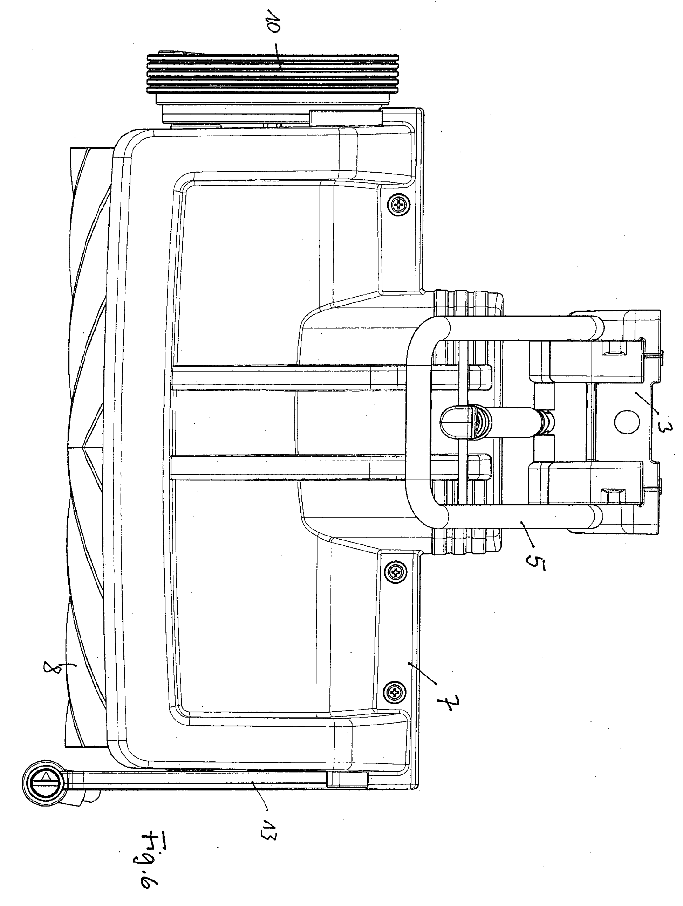

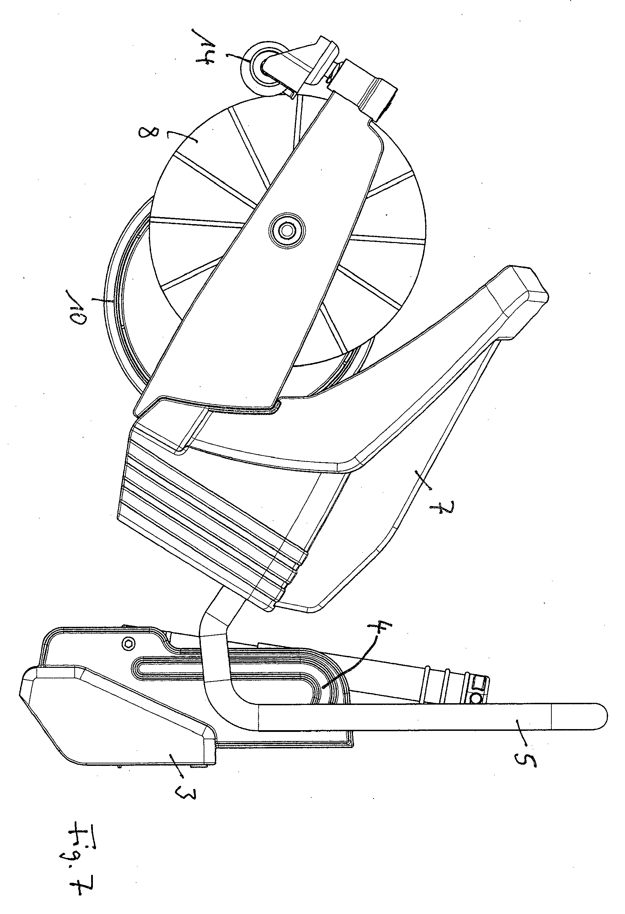

- Figuren 3 bis 7: das Kehrgerät gemäß Figur 1 in einer perspektivischen Ansicht, einer Seitenansicht, einer Vorderansicht, einer Aufsicht sowie in einer angehobenen Darstellung;
- Figuren 8 und 9: die wesentlichen Bestandteile des Kehrgeräts in zwei verschiedenen Explosionsdarstellungen.

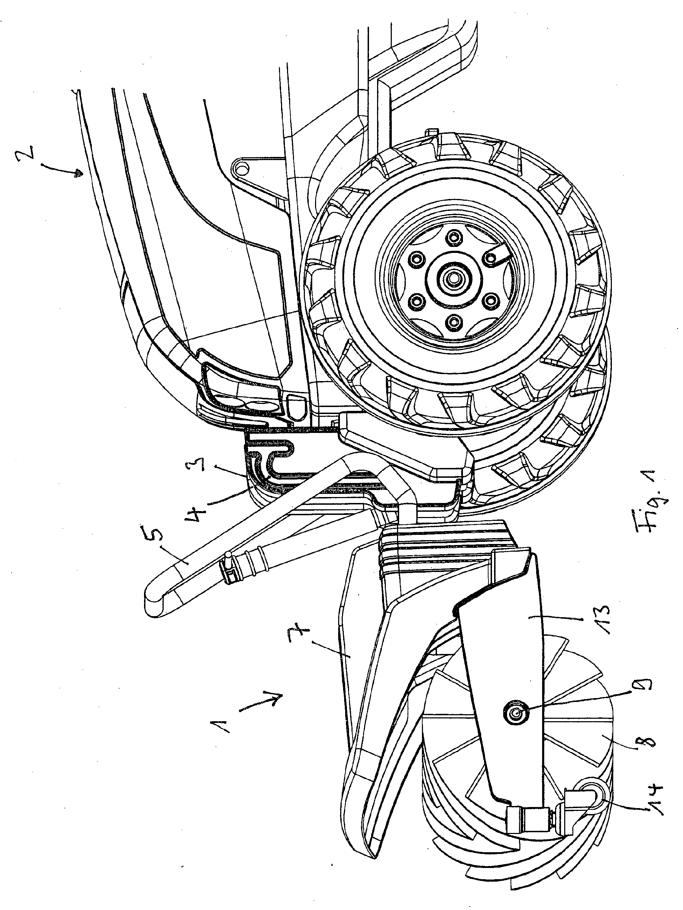

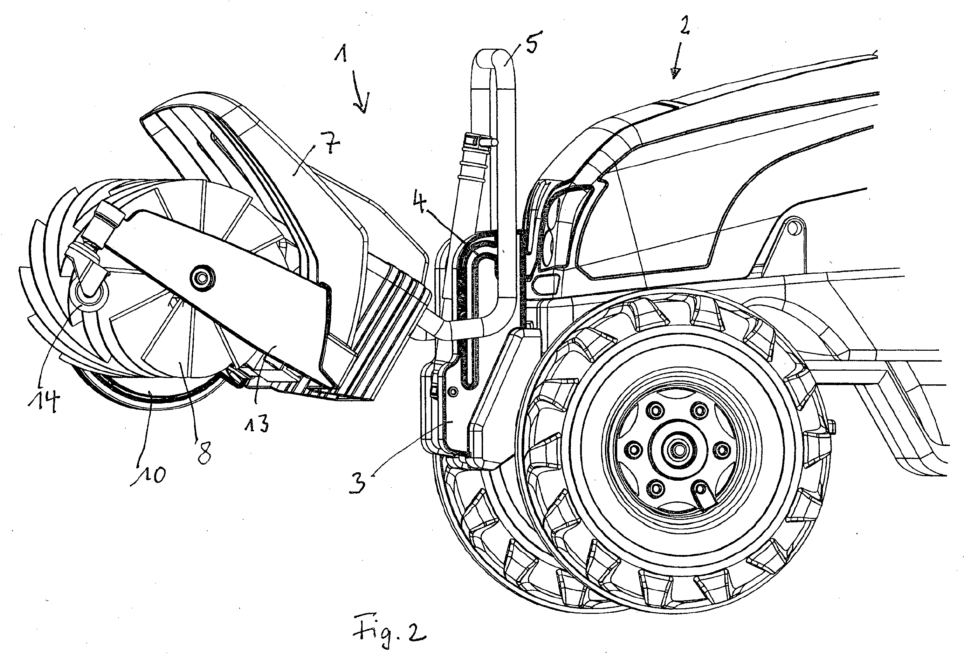

Wir die Figuren 1 und 2 zeigen, ist das Kehrgerät 1 vorne an einem Kinderfahrzeug 2 befestigt. Hierzu ist ein Adapter 3 lösbar, in der Horizontalen starr, an einem vorderen Kupplungsmaul des Kinderfahrzeugs angebracht, wobei der Adapter 3 seitliche Führungsschienen 4 enthält, in die ein Bügel 5 mit inneren Zapfen 6 eingreift. Der Bügel 5 ist mit einem vorzugsweise angeschweißten L-Profil 34 versehen, an dem eine Stange 27 angeschraubt ist, die an einem Gehäuse 7 des Kehrgeräts 1 angeschraubt ist. Der Bügel 5 kann so in den Führungsschienen 4 bewegt werden, dass das Kehrgerät 1 entweder gemäß Figur 1 am Boden anliegt oder gemäß Figur 2 in einer angehobenen Stellung arretiert ist.

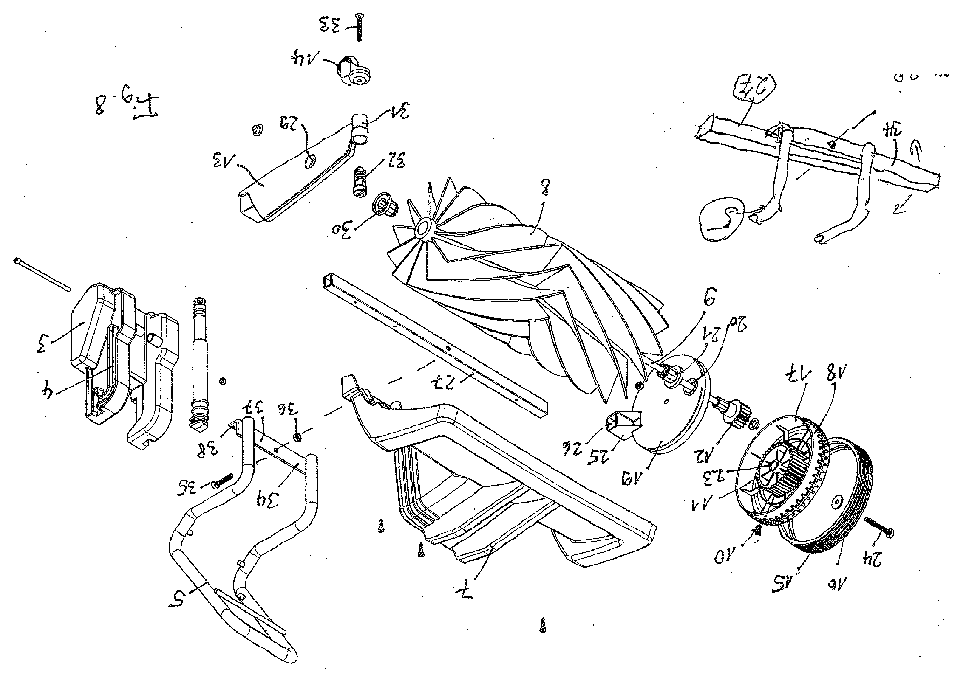

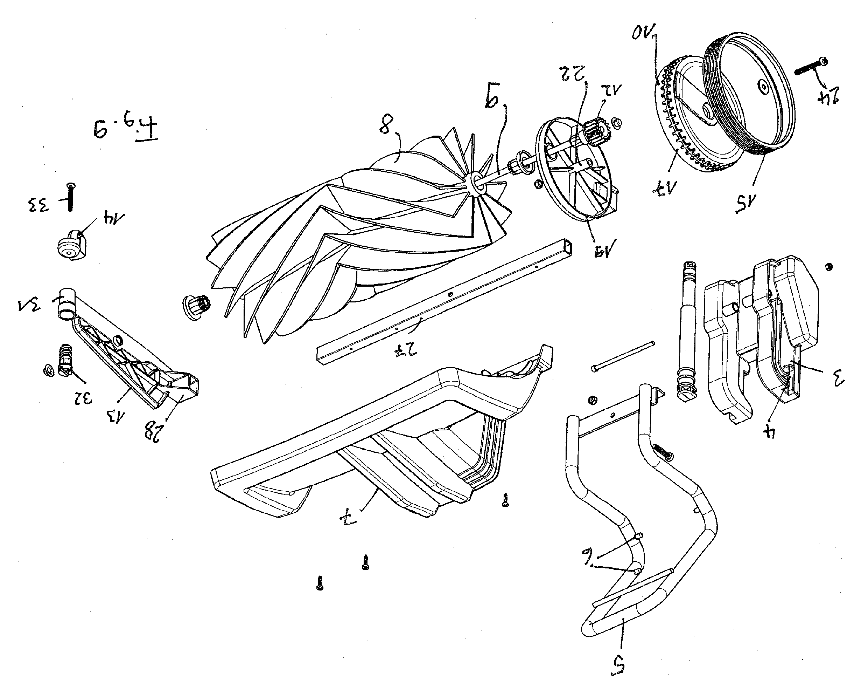

Das Kehrgerät enthält eine Bürstenwalze 8, die bei der Vorwärtsfahrt des Kinderfahrzeugs 2 im Uhrzeigersinn rotiert und am Boden liegende Partikel nach beiden Seiten hin weg befördert. Die Bürstenwalze 8 ist drehfest mit einer Achse 9 verbunden, die von einem in der funktionsfähigen Lage des Kehrgeräts 1 am Boden anliegenden Mitnehmerrad 10 über ein Zahnradgetriebe 11, 12 angetrieben wird (siehe Figuren 8 und 9). Die Bürstenachse 9 ist an ihrem von dem Mitnehmerrad 10 abgewandten Endabschnitt in einem Kragarmträger 13 drehbar gelagert, der sich an seinem freien Ende auf einer Rolle 14 abstützt.

Es wird nun auf die Figuren 8 und 9 Bezug genommen. Das Mitnehmerrad 10 ist aus einem napfförmigen Außenrad 15 mit einer kreiszylindrischen Lauffläche 16 mit großem Reibungskoeffizienten und einem darin eingesetzten ebenfalls napfförmigen Innenrad 17 zusammengesetzt, wobei die kreiszylindrische Lauffläche 16 an der kreiszylindrischen Umfangsfläche 18 des Innenrades anliegt. Das Innenrad 17 enthält einen konzentrischen Zahnkranz 11 mit Außenverzahriung, der an der Seitenwand des Innenrades angeformt ist. Die beiden Radbauteile 17 und 15 sind drehfest miteinander verbunden und bilden zusammengesetzt das Mitnehmerrad 10.

Das Mitnehmerrad kann alternativ auch aus einem einzigen napfförmigen Radkörper bestehen.

Zur Abdeckung der offenen Seite des Mitnehmerrades 10 ist eine Scheibe 19 vorgesehen, die auf weiter unten beschriebene Weise nicht-drehbar gehalten ist. Die Scheibe 19 enthält ein außermittiges Loch 20, in das ein Lagerkörper 21 eingesetzt ist, in dem die hindurchgehende Bürstenachse 9 drehbar gehalten ist. Der Endabschnitt der Bürstenachse 9 ist drehfest mit einem Zahnrad 12 mit Außenverzahnung verbunden, das mit dem Zahnkranz 11 kämmt. Die Position des Zahnrades 12 an dem Zahnkranz 11 ist durch die Scheibe 19 fixiert.

An der von der Bürstenwalze 8 abgewandten Seite steht mittig von der Scheibe 19 eine Gewindehülse bzw. Steckachse 22 ab, die in eine mittige Nabe bzw. Hülse 23 des Zahnkranzes 11 eingreift. Eine Schraube 24 befestigt die beiden Radteile 15 und 17 so an der feststehenden Scheibe 19, dass das zusammengesetzte Mitnehmerrad 10 frei drehbar ist.

In diesem Zustand verschließt die Scheibe 19, die einen etwas kleineren Durchmesser hat als der Innendurchmesser des Mitnehmerrades 10, dessen offene Seite, so dass das Zahnradgetriebe 11, 12 von außen nicht zugänglich ist. Der verbleibende Spalt zwischen der feststehenden Scheibe 19 und dem sich drehenden Mitnehmerrad 10 ist so klein, dass praktisch keine Fremdstoffe in den hohlen Innenraum des Mitnehmerrades 10 eintreten können.

An der Innenseite der Scheibe 19 ist an dessen Randbereich ein Lagerkörper 25 befestigt, der eine rechteckige Einstecköffnung 26 für eine Stange 27 hat, die unter dem Gehäuse 7 angeschraubt ist. Die Stange 27 hat einen entsprechend rechteckigen Querschnitt und greift formschlüssig mit ihrem anderen Ende in einen ähnlichen Lagerkörper 28 ein, der an dem Kragarmträger 13 angeformt ist. Der Kragarmträger 13 ist damit nicht-schwenkbar an der Stange 27 befestigt.

Die Stange 27 ist so an dem L-Profil 34 des Bügels 5 angeschraubt, dass die Stange 27 in beiden Richtungen um ihre Längsachse drehbar ist, wobei das gesamte Kehrgerät entsprechend um das L-Profil verschwenkt wird. Hierzu ist vorzugsweise zwischen dem Schraubenkopf 35 und der Stange 27 und zwischen der Schraubenmutter 36 und dem vertikalen Steg 37 jeweils eine nachgiebige Unterlegscheibe angeordnet, und die Stege 37 und 38 des L-Profils 34 dienen als Anschlag, so dass die Drehbarkeit der Stange 27 auf vorzugsweise 3° bis 5° in beiden Richtungen beschränkt ist. Hierdurch werden Bodenunebenheiten ausgeglichen, so dass das Mitnehmerrad 10 ohne Blockierung abläuft.

An einer axialen Zwischenposition hat der Kragarmträger 13 ein Loch 29, in das ein Lagerkörper 30 eingesetzt ist, in dem der zugehörige Endabschnitt der Bürstenachse 9 drehbar gelagert ist.

An seinem freien Ende ist der Kragarmträger 13 mit einer Gewindehülse 31 versehen, in der eine Einstellschraube 32 sitzt, an der die Rolle 14 bzw. deren Halterung mittels einer Schraube 33 befestigt ist. Durch Drehen der Schraube 32 ist die Höhenposition der Rolle 14 verstellbar.

Die Scheibe 19 und der Kragarmträger 13 bestehen vorzugsweise aus Kunststoff und sind durch Stege verstärkt, wie Figur 9 zeigt. Auch das aus zwei Radteilen 15 und 17 zusammengesetzten Mitnehmerrad 10 besteht ebenso wie das Gehäuse vorzugsweise aus Kunststoff.

Es wird betont, dass die Erfindung nicht auf die beschriebenen und dargestellten Ausführungsformen beschränkt ist, Vielmehr sind alle offenbarten Merkmale auf jede sinnvolle Weise einzeln miteinander kombinierbar.

## Patentansprüche

1. Kehrgerät (1) für ein Kinderfahrzeug, insbesondere Tretfahrzeug, das mit dem Kinderfahrzeug lösbar verbindbar ist und unter einem Gehäuse (7) eine Bürstenwalze (8) aufweist, die mit einer Achse (9) drehfest verbunden ist, wobei zum Antrieb der Achse (9) der Bürstenwalze (8) ein einziges Mitnehmerrad (10) angeordnet ist, das in der funktionsfähigen Lage des Kehrgerätes (1) am Boden anliegt und über ein Getriebe (11, 12) mit der Achse (9) der Bürstenwalze antriebsmäßig verbunden ist,
**dadurch gekennzeichnet,**
**dass** das Mitnehmerrad (10) einen hohlen Innenraum hat, in dem sich das Getriebe (11, 12) befindet,
**dass** der Innenraum des Mitnehmerrades (10) an einer offenen Seite durch eine feststehende Abdeckscheibe (19) abgedeckt ist, in der die Achse (9) der Bürstenwalze (8) außermittig drehbar gelagert ist,
**dass** die Abdeckscheibe (19) an einer Stange (27) angebracht ist, die an einem Bügel (5) und an dem Gehäuse (7) des Kehrgeräts (1) befestigt ist, dass auf den anderen Endabschnitt der Stange ein Kragarmträger (13) aufgesteckt ist, der nicht-schwenkbar an der Stange (27) gehalten ist und eine Rolle (14) trägt, die in der funktionsfähigen Lage des Kehrgeräts (1) am Boden anliegt,
**dass** die Achse (9) der Bürstenwalze (8) in einem Loch (29) des Kragarmträgers (13) drehbar gelagert ist
und **dass** das Kehrgerät durch den Bügel (5) in eine vom Boden beabstandete Lage anhebbar ist.

2. Kehrgerät nach Anspruch 1,
**dadurch gekennzeichnet,**
**dass** das Kehrgerät (1) über einen Adapter (3) an einem Kupplungsmaul des Kinderfahrzeugs (2) befestigbar ist, wobei die Befestigung in der horizontalen Ebene starr ist.

3. Kehrgerät nach Anspruch 1 oder 2,
**dadurch gekennzeichnet,**
**dass** die Stange (27) in beiden Richtungen um einen kleinen Winkel um ihre Längsachse drehbar angeordnet ist.

4. Kehrgerät nach den Ansprüchen 1 bis 3,
**dadurch gekennzeichnet,**
**dass** das Getriebe ein Zahnradgetriebe (11, 12) ist.

5. Kehrgerät nach Anspruch 4,
**dadurch gekennzeichnet,**
**dass** das Zahnradgetriebe einen mittig in dem Innenraum des Mitnehmerrades (10) angeordneten Zahnkranz (11), der drehfest mit dem Mitnehmerrad (10) verbunden ist, und ein Zahnrad (12) aufweist, das mit dem Zahnkranz (11) kämmt und drehfest mit der Achse (9) der Bürstenwalze (8) verbunden ist.

6. Kehrgerät nach den Ansprüchen 1 bis 5,
**dadurch gekennzeichnet,**
**dass** an einem Randbereich der Scheibe (19) ein Lagerkörper (25) mit einer Einstecköffnung (26) angebracht ist, in die ein Endabschnitt der Stange (27) mit einem formschlüssigen, nicht-runden Querschnitt eingesteckt ist.

7. Kehrgerät nach den Ansprüchen 1 bis 6,
**dadurch gekennzeichnet,**
**dass** die Rolle (14) an einer Gewindespindel (32) befestigt ist, die in eine Gewindehülse (31) des Kragarmträgers (13) eingeschraubt ist, so dass die Höhenlage der Achse (9) der Bürstenwalze (8) verstellbar ist.

## Claims

1. A sweeping device (1) for a children's vehicle, particularly a pedal vehicle, which is releasably connectable to the children's vehicle and includes a brush roller (8) below a housing (7), which is rotationally fixedly connected to a shaft (9), wherein arranged to drive the shaft (9) of the brush roller (8) there is a single drive wheel (10), which, in the functional position of the sweeping device (1), engages the ground and is in drive connection with the shaft (9) of the brush roller by means of a gear mechanism (11, 12), **characterised in that** the drive wheel (10) has a hollow interior, in which the gear mechanism (11, 12) is situated, that the interior of the drive wheel (10) is covered at an open side by a fixed cover plate (19), in which the shaft (9) of the brush roller (8) is eccentrically rotatably mounted, that the cover plate (19) is attached to a rod (27), which is fastened to a bracket (5) and to the housing (7) of the sweeping device (1), that attached to the other end section of the rod there is a cantilever carrier (13), which is mounted non-pivotably on the housing (7) and carries a roller (14), which, in the functional position of the sweeping device (1), engages the ground, that the shaft (9) of the brush roller (8) is rotatably mounted in a hole (29) in the cantilever carrier (13) and that the sweeping device is liftable by the bracket (5) into a position spaced from the ground.

2. A sweeping device as claimed in Claim 1, **characterised in that** the sweeping device (1) is fastenable by means of an adapter (3) to a coupling jaw on the children's vehicle (2), wherein the fastening is rigid in the horizontal plane.

3. A sweeping device as claimed in Claim 1 or 2, **characterised in that** the rod (27) is arranged to be rotatable in both directions through a small angle about its longitudinal axis.

4. A sweeping device as claimed in Claims 1 to 3, **characterised in that** the gear mechanism is a toothed gear mechanism (11, 12).

5. A sweeping device as claimed in Claim 4, **characterised in that** the toothed gear mechanism includes an annular gear (11), which is arranged centrally in the interior of the drive wheel (10) and is rotationally fixedly connected to the drive wheel (10) and includes a gear wheel (12), which is in mesh with the annular gear (11) and is rotationally fixedly connected to the shaft (9) of the brush roller (8).

6. A sweeping device as claimed in Claims 1 to 5, **characterised in that** attached to an edge region of the plate (19) there is a bearing body (25) with an insertion opening (26), into which a form-locking, non-circular cross-section of an end section of the rod (27) is inserted.

7. A sweeping device as claimed in Claims 1 to 6, **characterised in that** the roller (14) is fastened to a threaded spindle (32), which is screwed into a threaded sleeve (31) on the cantilever carrier (13) so that the height of the shaft (9) of the brush roller (8) is adjustable.

## Revendications

1. Appareil de balayage (1) pour un véhicule d'enfant, en particulier un trotteur, qui peut être relié de manière détachable au véhicule d'enfant et présente sous un boîtier (7) un rouleau à brosse (8) qui est relié de manière fixe en rotation à un axe (9), dans lequel une seule roue d'entraînement (10) est agencée, pour l'entraînement de l'axe (9) du rouleau à brosse (8), laquelle roue d'entraînement repose contre le fond dans la position fonctionnelle de l'appareil de balayage (1) et est reliée en entraînement par un engrenage (11, 12) à l'axe (9) du rouleau à brosse, **caractérisé en ce que**
la roue d'entraînement (10) a un espace intérieur creux, dans lequel l'engrenage (11, 12) se trouve,
l'espace intérieur de la roue d'entraînement (10) est recouvert sur un côté ouvert par un disque de recouvrement fixe (19), dans lequel l'axe (9) du rouleau à brosse (8) est logé de manière rotative et excentrée,
le disque de recouvrement (19) est monté sur une tige (27) qui est fixée sur un étrier (5) et sur le boîtier (7) de l'appareil de balayage (1),
un support de bras en porte-à-faux (13) est enfilé sur l'autre section d'extrémité de la tige, lequel est maintenu de manière non pivotante sur la tige (27) et porte un rouleau (14) qui repose contre le fond dans la position fonctionnelle de l'appareil de balayage (1), l'axe (9) du rouleau à brosse (8) est logé de manière rotative dans un trou (29) du support de bras en porte-à-faux (13),
et l'appareil de balayage peut être levé par l'étrier (5) dans une position espacée du fond.

2. Appareil de balayage selon la revendication 1, **caractérisé en ce que**
l'appareil de balayage (1) peut être fixé par un adaptateur (3) sur une mâchoire de couplage du véhicule pour enfant (2), dans lequel la fixation est rigide dans le plan horizontal.

3. Appareil de balayage selon la revendication 1 ou 2, **caractérisé en ce que**
la tige (27) est agencée de manière rotative dans les deux sens d'un petit angle autour de son axe longitudinal.

4. Appareil de balayage selon les revendications 1 à 3, **caractérisé en ce que**
l'engrenage est un engrenage à roue dentée (11, 12).

5. Appareil de balayage selon la revendication 4, **caractérisé en ce que**
l'engrenage à roue dentée présente une couronne dentée (11) agencée au milieu dans l'espace intérieur de la roue d'entraînement (10), laquelle couronne est reliée de manière fixe en rotation à la roue d'entraînement (10), et une roue dentée (12) qui s'engrène avec la couronne dentée (11) et est reliée de manière fixe en rotation à l'axe (9) du rouleau à brosse (8).

6. Appareil de balayage selon les revendications 1 à 5, **caractérisé en ce que**
un corps de palier (25) avec une ouverture d'enfichage (26) est monté sur une zone de bord du disque (19), dans laquelle ouverture une section d'extrémité de la tige (27) est enfichée avec une section transversale à complémentarité de formes non ronde.

7. Appareil de balayage selon les revendications 1 à 6, **caractérisé en ce que**
le rouleau (14) est fixé sur une broche filetée (32) qui est vissée dans une douille filetée (31) du support de bras en porte-à-faux (13) de sorte que la position verticale de l'axe (9) du rouleau à brosse (8) puisse être réglée.
